# EUROPEAN PATENT APPLICATION

(11) **EP 4 730 228 A1**
(43) Date of publication of application: **22.04.2026**
(21) Application number: 25208893.5
(22) Date of filing: 15.10.2025
(51) Int. Cl.: G06Q 10/06, G06Q 30/0207, G06Q 50/06

(54) **INFORMATION PROCESSING DEVICE**

(30) Priority: 16.10.2024 JP 2024180930
(71) Applicant: Panasonic Intellectual Property Management Co., Ltd., Kadoma-shi, Osaka 571-0057 (JP)
(72) Inventor: OHTA, Kohei, Kadoma-shi, Osaka, 571-0057 (JP); OTSUKA, Kyoko, Kadoma-shi, Osaka, 571-0057 (JP); OGAMI, Naoki, Kadoma-shi, Osaka, 571-0057 (JP)
(74) Representative: Eisenführ Speiser

(57) **Abstract**

An information processing device of the present disclosure is an information processing device for notifying environmental contribution information based on a reduction amount of carbon dioxide emission by a home appliance used by a participant of an environmental contribution project, the information processing device including: a communication unit that performs communication via a network; and a controller that controls the communication unit, in which the controller acquires environmental contribution information calculated based on operation information of the home appliance, and notifies the participant of the environmental contribution information via the communication unit.

## Description

### BACKGROUND

### 1. Technical Field

The present disclosure relates to an information processing device.

### 2. Description of the Related Art

In recent years, in order to prevent global warming, various measures have been taken to reduce emission of greenhouse gas such as carbon dioxide. For example, there is known a "J-credit system" in which Japan certifies a reduction amount or an absorption amount of greenhouse gas emissions by introduction of energy saving equipment or forest management as a "credit".

In such measures, a generation device that generates a report of an effect on environmental contribution such as an emission reduction amount of greenhouse gas is known. For example, Patent Literature 1 discloses an environmental contribution effect report generation device that generates a report on an environmental contribution effect due to introduction of equipment.

### Citation List

### Patent Literature

PTL 1: Unexamined Japanese Patent Publication No. 2021-149241

### SUMMARY

In the environmental contribution effect report generation device of PTL 1, there is still room for improvement regarding acquisition and notification of the contribution degree of each participant.

The present disclosure provides an information processing device capable of acquiring and notifying a contribution degree of each participant.

An information processing device according to an aspect of the present disclosure is
an information processing device for notifying environmental contribution information based on a reduction amount of carbon dioxide emission by a home appliance used by a participant of an environmental contribution project, the information processing device including:
a communication unit that performs communication via a network; and
a controller that controls the communication unit, in which
the controller acquires the environmental contribution information calculated based on the operation information of the home appliance, and notifies the participant of the environmental contribution information via the communication unit.

A method according to an aspect of the present disclosure is a method for calculating and notifying environmental contribution information based on a reduction amount of carbon dioxide emission by a home appliance used by a participant of an environmental contribution project, the method comprising the steps of:
acquiring operation information of the home appliance;
calculating the environmental contribution information based on the operation information; and
notifying the participant of the calculated environmental contribution information.

A program according to an aspect of the present disclosure causes the method of the above aspect to be executed.

A recording medium according to an aspect of the present disclosure is a computer-readable recording medium in which a program for executing the method of the above aspect is recorded.

### BRIEF DESCRIPTION OF THE DRAWINGS

Fig. 1 is a block diagram illustrating a configuration of an information processing device according to the present disclosure;
Fig. 2 is a flowchart illustrating an operation flow of the information processing device of Fig. 1;
Fig. 3 is a sequence diagram illustrating a processing sequence of the information processing device of Fig. 1;
Fig. 4 is a diagram illustrating an example of environmental contribution information output by the information processing device of Fig. 1;
Fig. 5 is a flowchart illustrating an operation flow of an information processing device according to a second exemplary embodiment;
Fig. 6 is a diagram illustrating an example of an environment ratio output by the information processing device;
Fig. 7 is a flowchart illustrating an operation flow of an information processing device according to a third exemplary embodiment;
Fig. 8 is a diagram illustrating an example of a reward output by the information processing device;
Fig. 9 is a flowchart illustrating an operation flow of an information processing device according to a fourth exemplary embodiment;
Fig. 10 is a sequence diagram illustrating a processing sequence of the information processing device; and
Fig. 11 is a diagram illustrating an example of a selection screen output by the information processing device.

### DETAILED DESCRIPTIONS

### (Background to present disclosure)

Various measures have been taken to reduce an emission amount of greenhouse gas such as carbon dioxide. In order to make these measures more effective, it is also considered to issue, as a report, the emission reduction amount of greenhouse gas by the measures.

For example, PTL 1 discloses an environmental contribution effect report generation device that reports an environmental contribution effect by an investment project to an investor.

As a measure for emitting greenhouse gas, there is a system in which the national government certifies the emission reduction amount or absorption amount of greenhouse gas, such as the J-credit system. In such a system, it is also possible to collectively certify, as one project, small-scale reduction activities such as reduction of greenhouse gas emission in use of home appliances at home.

In this case, it is important not only to report the environmental contribution effect as a whole project but also to report the environmental contribution effect to individual users who use electrical appliances at home, thereby improving the awareness of the environmental contribution of each user.

In the environmental contribution effect report generation device of PTL 1, the environmental contribution effect of the entire project is indicated to the investor, and the environmental contribution effect of each user cannot be clearly indicated, and it is difficult to improve the desire for participation of each user to the environmental contribution.

Therefore, the present inventors have considered providing information that allows each participant to grasp the contribution degree by the home appliance used by the participant, and have reached the following invention.

### (First exemplary embodiment)

### [Overall configuration]

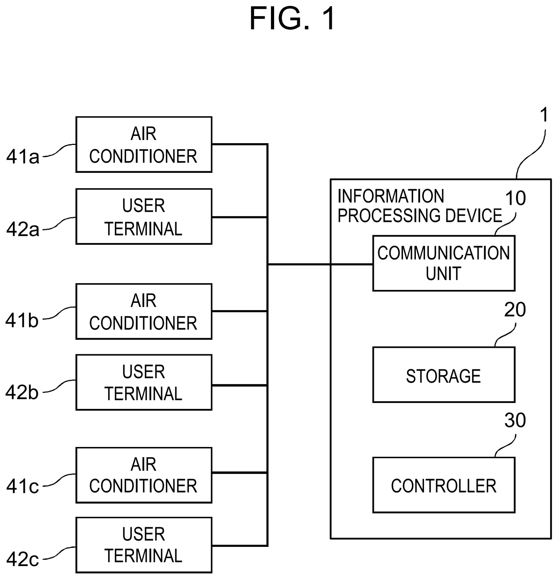

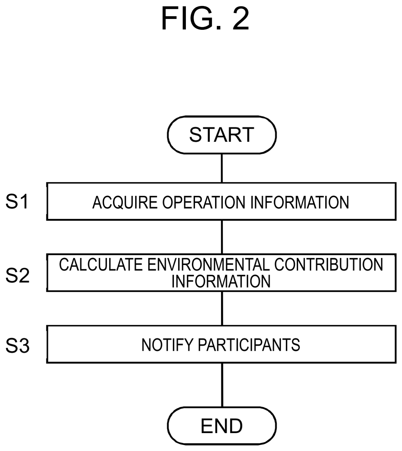

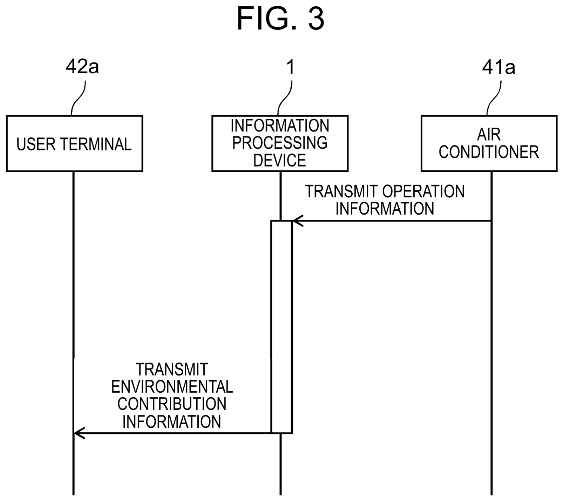

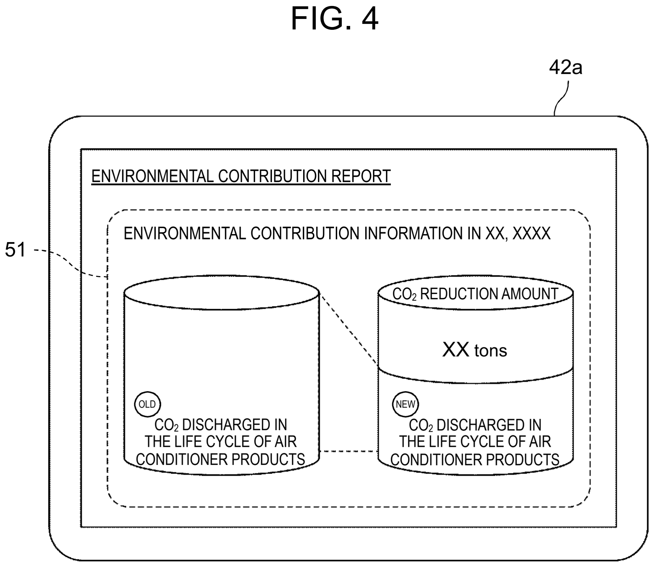

Fig. 1 is a block diagram illustrating a configuration of information processing device 1 according to the present disclosure. Fig. 2 is a flowchart illustrating an operation flow of information processing device 1 of Fig. 1. Fig. 3 is a sequence diagram illustrating a processing sequence of information processing device 1 of Fig. 1. Fig. 4 is a diagram illustrating an example of environmental contribution information output by information processing device 1 of Fig. 1.

Information processing device 1 is a device that calculates environmental contribution information based on a reduction amount of carbon dioxide emission by a home appliance used by a participant of an environmental contribution project.

The environmental contribution project is, for example, a project for participating in a system for certifying an emission reduction amount of greenhouse gas such as carbon dioxide and carrying out activities for protecting the global environment. In the present exemplary embodiment, as the environmental contribution project, a project registered in the J-credit system will be described as an example. For example, a user who uses electrical appliances at home can participate in the environmental contribution project. In the present exemplary embodiment, an electric appliance used at home is referred to as a "home appliance", and a case where the home appliance is an air conditioner will be described as an example.

In addition, the environmental contribution information is information indicating how much the carbon dioxide emission amount has been reduced by the environmental contribution project. In the present exemplary embodiment, information processing device 1 calculates the carbon dioxide emission reduction amount in each home appliance (air conditioner) used by the participant of the project as the environmental contribution information.

Information processing device 1 calculates environmental contribution information based on operation information of home appliances used by participants in the environmental contribution project. The operation information of the home appliance is information including logs related to operation such as a start time, a stop time, and a power consumption amount of each home appliance. When the home appliance is an air conditioner, the operation information includes information such as a start time, a stop time, an operation mode (such as a heating operation or a cooling operation), and a set temperature.

As illustrated in Fig. 1, information processing device 1 includes communication unit 10, storage 20, and controller 30.

Communication unit 10 includes a network interface circuit that performs wired or wireless communication with air conditioners 41a to 41c or user terminals 42a to 42c used by the users participating in the environmental contribution project. Communication unit 10 communicates with air conditioners 41a to 41c or user terminals 42a to 42c using a predetermined communication standard such as mobile communication such as a wide area network (WAN), a local area network (LAN), long term evolution (LTE), or 5G, power line communication, or near-field radio communication including Bluetooth (registered trademark).

Storage 20 stores the operation information of the home appliance acquired via communication unit 10. Storage 20 includes, for example, a semiconductor storage device such as a flash memory or a solid state drive (SSD), a magnetic storage device such as a hard disk drive (HDD), or a volatile memory such as an SRAM or a DRAM.

Controller 30 calculates the environmental contribution information based on the operation information stored in storage 20. Furthermore, controller 30 notifies the participants of the calculated environmental contribution information via communication unit 10. As a specific example of the notification to the participants, for example, the environmental contribution information is displayed on user terminals 42a to 42c via communication unit 10. The environmental contribution information may be displayed on the main bodies or control panels of air conditioners 41a to 41c, or on the display unit of the remote controller.

Controller 30 includes, for example, a processor that implements a predetermined function by executing a program stored in a built-in storage device. Controller 30 is not limited to one that implements a predetermined function by cooperation of hardware and software, and may be a hardware circuit designed to implement a predetermined function. That is, controller 30 can be configured by various processors such as a microcomputer, a CPU, an MPU, a GPU, a DSP, an FPGA, and an ASIC.

A detailed method for calculating the environmental contribution information will be described with reference to Figs. 2 to 3. Here, control for air conditioner 41a and user terminal 42a in Fig. 1 will be described. Similar control is performed also on air conditioners 41b to 41c and user terminals 42b to 42c.

As illustrated in Figs. 2 and 3, information processing device 1 acquires operation information of air conditioner 41a, calculates environmental contribution information based on the operation information, and transmits the environmental contribution information to user terminal 42a.

First, in step S1, storage 20 acquires operation information of air conditioner 41a. Storage 20 acquires, via communication unit 10, operation information of each of air conditioners 41a to 41c used by the participants of the environmental contribution project and stores the operation information. Storage 20 acquires the operation information at a predetermined time interval. The predetermined time interval is, for example, every 24 hours, every month, every 3 months, every year, or the like, and storage 20 preferably acquires the operation information after a certain amount of operation information is accumulated in air conditioner 41a.

Next, in step S2, the environmental contribution information is calculated by controller 30. Controller 30 calculates a first environmental contribution calculation value indicating energy consumption information of air conditioner 41a used by the participant in the environmental contribution project and a second environmental contribution calculation value serving as a baseline. The energy consumption information includes, for example, a power consumption amount or a use time of air conditioner 41a, and indicates information related to the power consumption. Controller 30 calculates the environmental contribution information based on the first environmental contribution calculation value and the second environmental contribution calculation value.

The first environmental contribution calculation value is calculated based on the operation information stored in storage 20 in step S1. Controller 30 can calculate the first environmental contribution calculation value by acquiring, for example, the power consumption amount of air conditioner 41a in a predetermined period based on the operation information in the predetermined period and multiplying the acquired power consumption amount by a predetermined carbon emission factor. The power consumption amount can be calculated by controller 30 based on the start time, the stop time, and the like of air conditioner 41a included in the operation information. Alternatively, the power consumption amount may be included in the operation information. Specifically, first environmental contribution calculation value EM1 can be calculated by an expression of EM1 = EL × CEF based on power consumption amount EL (Electricity Load) of air conditioner 41a during a predetermined period and carbon emission factor CEF (Carbon Emission Factor). The predetermined period is, for example, a period of 24 hours, 1 month, 3 months, or 1 year. Controller 30 may calculate the first environmental contribution calculation value at the same timing as the predetermined interval at which the operation information is acquired in step S1, or may calculate the first environmental contribution calculation value without being limited to a timing at which the operation information is acquired. The carbon emission factor CEF (CO2 emission factor) is an index indicating the amount of carbon dioxide emitted for supplying 1kWh of electricity, and the unit is "kg-CO2/kWh". When air conditioner 41a uses, for example, electricity supplied by an electric utility, a carbon emission factor determined for each electric utility is used.

The second environmental contribution calculation value is a value indicating energy consumption information serving as a standard (baseline) for calculating the carbon dioxide emission reduction amount. For example, controller 30 can calculate the second environmental contribution calculation value by multiplying the calculated first environmental contribution calculation value by a predetermined coefficient indicating a ratio between an annual performance factor (APF) indicating the annual energy consumption efficiency of air conditioner 41a and the APF of the air conditioner serving as the baseline. Predetermined coefficient ε can be calculated by equation ε = APF1/APF2 based on annual performance factor APF1 of air conditioner 41a and annual performance factor APF2 as a baseline. Second environmental contribution calculation value EM2 can be calculated by equation EM2 = EM1 × ε based on first environmental contribution calculation value EM1 and predetermined coefficient ε. The APF of the air conditioner serving as the baseline refers to, for example, the APF of the air conditioner used by the participants of the environmental contribution project before the start of use of air conditioner 41a, or predetermined APF defined by the top runner system. In the present exemplary embodiment, controller 30 multiplies first environmental contribution calculation value EM1 by predetermined coefficient ε as the ratio of the APF of air conditioner 41a to baseline APF to calculate second environmental contribution calculation value EM2.

Controller 30 can calculate the environmental contribution information indicating the carbon dioxide emission reduction amount by air conditioner 41a by subtracting the first environmental contribution calculation value from the second environmental contribution calculation value. Specifically, environmental contribution information ER can be calculated by equation ER = EM2-EM1 based on first environmental contribution calculation value EM1 and second environmental contribution calculation value EM2. The difference between the first environmental contribution calculation value indicating the energy consumption information when air conditioner 41a is used and the second environmental contribution calculation value indicating the baseline energy consumption information is the environmental contribution information, and indicates the carbon dioxide emission reduction amount by air conditioner 41a.

Next, in step S3, controller 30 notifies the participant of the environmental contribution information calculated in step S2 via communication unit 10. In the present exemplary embodiment, controller 30 can notify the participant of the environmental contribution information by transmitting the environmental contribution information to user terminal 42a such as a PC, a smartphone, or a tablet possessed by the participant. Fig. 4 illustrates an example of environmental contribution information 51 transmitted to the smartphone which is user terminal 42a possessed by the participant. In the example of Fig. 4, the environmental contribution information 51 includes the carbon dioxide emission amount of the air conditioner used before the start of use of air conditioner 41a and the carbon dioxide emission amount of air conditioner 41a. Therefore, it is possible to inform the participant of the carbon dioxide emission amount by using air conditioner 41a with numerical values and visual information. As a result, it is possible to improve the desire for participation of the participants in the environmental contribution project.

### [Effects]

According to the above-described exemplary embodiment, the following effects can be obtained.

Information processing device 1 calculates environmental contribution information based on a reduction amount of carbon dioxide emission by a home appliance used by a participant of the environmental contribution project. Information processing device 1 includes communication unit 10, storage 20, and controller 30. Communication unit 10 communicates via a network. Storage 20 acquires, via communication unit 10, the operation information of the home appliance and stores the operation information. Controller 30 acquires the environmental contribution information based on the operation information. Controller 30 notifies the participants of the environmental contribution information via communication unit 10.

With such a configuration, it is possible to provide an information processing device capable of acquiring and notifying the contribution degree of each participant. By acquiring and notifying the contribution degree of each participant, it is possible to improve the desire for participation of the participants in the environmental contribution project.

Controller 30 calculates a first environmental contribution calculation value, calculates a second environmental contribution calculation value, and calculates environmental contribution information based on the first environmental contribution calculation value and the second environmental contribution calculation value. The first environmental contribution calculation value is a value indicating energy consumption information of the home appliance calculated based on the operation information in a predetermined period. The second environmental contribution calculation value is a value indicating energy consumption information which is calculated based on the first environmental contribution calculation value and a predetermined coefficient and serves as a reference for calculating the carbon dioxide emission reduction amount.

With such a configuration, the environmental contribution information can be calculated more accurately.

The present disclosure can provide a method for calculating and notifying environmental contribution information based on a reduction amount of carbon dioxide emission by a home appliance used by a participant of an environmental contribution project, the method including the steps of: acquiring operation information of the home appliance; calculating environmental contribution information based on the operation information; and notifying the participant of the calculated environmental contribution information.

The present disclosure can provide a computer program and a storage medium for controlling information processing device 1.

Furthermore, the present disclosure can provide a computer program for causing information processing device 1 to execute the above-described method.

The computer program is stored in a non-transitory computer-readable storage medium. When the computer program is read and executed by controller 30 of information processing device 1, the above-described method is realized.

The non-transitory computer-readable storage medium may be storage 20 of information processing device 1 or may be a storage device outside information processing device 1.

Note that, in the above-described exemplary embodiment, an example has been described in which controller 30 calculates the first environmental contribution calculation value based on the operation information in the predetermined period, but the present invention is not limited thereto. For example, controller 30 may calculate an estimated value of future environmental contribution information based on the first environmental contribution calculation value. More specifically, the estimated value of the first environmental contribution calculation value of air conditioner 41a in the next year may be calculated based on operation information for a predetermined period, for example, one year. By calculating the estimated value of the environmental contribution information, it is possible to further improve the desire for participation of the participants in the environmental contribution project.

In addition, in the above-described exemplary embodiment, an example has been described in which controller 30 calculates the second environmental contribution calculation value using a common coefficient during the cooling operation and the heating operation, but the present invention is not limited thereto. For example, controller 30 may calculate the second environmental contribution calculation value using different coefficients between the heating operation and the cooling operation. In an air conditioner, energy consumption efficiency may be different between a heating operation and a cooling operation. Therefore, coefficients based on different APFs may be used for the heating operation and the cooling operation. That is, predetermined coefficient ε includes first coefficient ε1 during the cooling operation of air conditioner 41a and second coefficient ε2 during the heating operation of air conditioner 41a. Based on annual performance factor APFc during the cooling operation and annual performance factor APF2 as a baseline, first coefficient ε1 can be calculated by equation ε1= AFPc/APF2. Similarly, based on annual performance factor AFPw during the heating operation and annual performance factor APF2 as a baseline, second coefficient ε2 can be calculated by equation ε2 = APFw/APF2. During the cooling operation of air conditioner 41a, controller 30 can calculate second environmental contribution calculation value EM2 based on first environmental contribution calculation value EM1 and first coefficient ε1. Further, controller 30 can calculate second environmental contribution calculation value EM2 based on first environmental contribution calculation value EM1 and second coefficient ε2 during the heating operation of air conditioner 41a. In addition, controller 30 may calculate the second environmental contribution calculation value using either first coefficient ε1 or second coefficient ε2 depending on the season. For example, controller 30 may calculate first environmental contribution calculation value EM1 using second coefficient ε2 during the heating operation from October to March, and may calculate first environmental contribution calculation value EM1 using first coefficient ε1 during the cooling operation from April to September. With such a configuration, the environmental contribution information can be calculated more accurately.

In addition, in the above-described exemplary embodiment, an example in which controller 30 calculates the environmental contribution information based on the operation information of air conditioner 41a has been described, but the present invention is not limited thereto. For example, controller 30 may calculate the first environmental contribution calculation value based on the power consumption amount of the indoor unit and the power consumption amount of the outdoor unit of air conditioner 41a. Controller 30 can calculate the first environmental contribution calculation value by, for example, calculating the power consumption amounts of the indoor unit and the outdoor unit based on the operation information and multiplying a value obtained by adding the respective power consumption amounts by the carbon emission factor. For example, the power consumption amount of the indoor unit can be calculated by acquiring a rotational speed of the indoor fan motor of air conditioner 41a and referring to a power consumption table that associates the rotational speed of the indoor fan motor with the power consumption amount. As the rotational speed of the indoor fan motor, for example, a value measured by a sensor or the like can be stored in storage 20 as the operation information. The power consumption amount of the outdoor unit can be calculated based on the AC voltage, the AC current, and the power factor of the outdoor unit. As the AC voltage, for example, a value defined by a model of air conditioner 41a can be used. As the AC current, for example, a value measured by a sensor or the like can be stored in storage 20 as the operation information. The power factor can be calculated based on the conversion table based on the values of the AC voltage and the AC current. With such a configuration, the environmental contribution information can be calculated more accurately.

In addition, in the above-described exemplary embodiment, an example has been described in which controller 30 calculates power consumption amount EL of air conditioner 41a based on the operation information, and calculates first environmental contribution calculation value EM1 based on power consumption amount EL and carbon emission factor CEF, but the present invention is not limited thereto. Controller 30 can calculate a use time of air conditioner 41a in a predetermined period based on the operation information and use the use time as first environmental contribution calculation value EM1. In this case, controller 30 can calculate second environmental contribution calculation value EM2 based on the use time of air conditioner 41a (first environmental contribution calculation value EM1) and predetermined coefficient ε.

Furthermore, in the above-described exemplary embodiment, an example in which controller 30 notifies user terminal 42a of the participant of the environmental contribution information has been described, but the present invention is not limited thereto. Controller 30 may notify the participant of information for browsing the environmental contribution information, for example, a URL.

Furthermore, in the above-described exemplary embodiment, an example in which the environmental contribution project is the J-credit system has been described, but the present invention is not limited thereto. The environmental contribution project may be a carbon dioxide emission reduction amount certification system other than the J-credit system.

Furthermore, in the above-described exemplary embodiment, an example in which controller 30 calculates the environmental contribution information has been described, but the present invention is not limited thereto. The environmental contribution information may be calculated by, for example, user terminals 42a to 42c possessed by the participants, and controller 30 may acquire the environmental contribution information from respective user terminals 42a to 42c via communication unit 10.

In addition, in the above-described exemplary embodiment, an example in which the home appliance is an air conditioner has been described, but the present invention is not limited thereto. The home appliance may be, for example, a refrigerator. Since the refrigerator is normally operated at all times, information processing device 1 can calculate the environmental contribution information without using the operation information. For example, controller 30 may calculate the environmental contribution information based on the power consumption amount and the energy consumption efficiency of the specification value or the catalog value of the refrigerator after a lapse of a predetermined period from participation of the participant in the environmental contribution project.

In addition, in the above-described exemplary embodiment, an example in which storage 20 stores the operation information has been described, but the present invention is not limited thereto. In addition to the operation information, storage 20 may store information on home appliances (air conditioners 41a to 41c) participating in the environmental contribution project, participant information on participants in the environmental contribution project using the home appliances, and user information on users using the home appliances. One of the users using the home appliances is stored in storage 20 as a participant in the environmental contribution project. Therefore, in storage 20, it is possible to distinguish and manage the participant in the environmental contribution project and the user not participating in the environmental contribution project. Storage 20 can store the home appliances and the users including the participants in association with each other. For example, storage 20 can store each of family members living in the same house as a user associated with one air conditioner 41a, and store one of the users associated with the air conditioner 41a as a participant. Controller 30 can notify user terminals 42a to 42c possessed by the participants associated with the home appliances and the terminals possessed by the users of the environmental contribution information. Controller 30 may notify all the users including the participants associated with air conditioner 41a of the environmental contribution information. Alternatively, controller 30 may notify the environmental contribution information only to the participants associated with air conditioner 41a, and may not notify the environmental contribution information to users other than the participants associated with air conditioner 41a. In this case, the environmental contribution information can be correctly notified to the participants of the environmental contribution program.

Storage 20 can store one participant in association with each of the plurality of home appliances participating in the environmental contribution project. Storage 20 may further associate one or a plurality of users who are not participants with each of the plurality of home appliances participating in the environmental contribution project. Controller 30 acquires environmental contribution information of all or some home appliances participating in the environmental contribution project as a target. Controller 30 can notify each of the associated participants of each of the acquired environmental contribution information. Since the home appliances participating in the environmental contribution project and the participants using the home appliances participating in the environmental contribution project are associated on a one-to-one basis, controller 30 can correctly notify each of the participants of the information on the home appliances that they use.

### (Second exemplary embodiment)

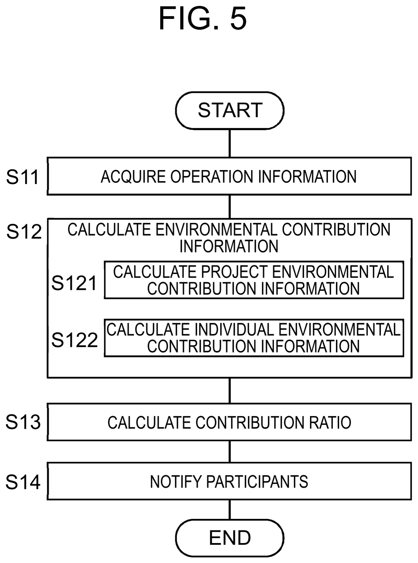

A second exemplary embodiment will be described with reference to Figs. 5 to 6. In the second exemplary embodiment, the same or equivalent components as those in the first exemplary embodiment are denoted by the same reference numerals as those in the first exemplary embodiment. In the second exemplary embodiment, the description overlapping with the first exemplary embodiment is omitted.

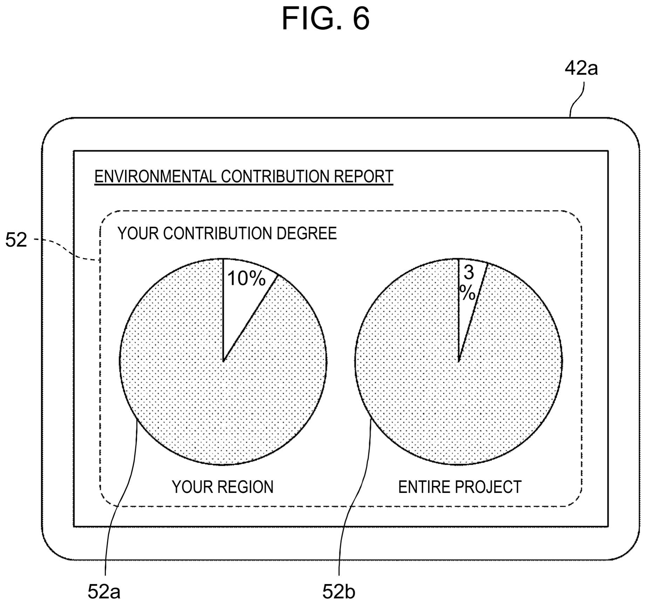

Fig. 5 is a flowchart illustrating an operation flow of information processing device 1 according to the second exemplary embodiment. Fig. 6 is a diagram illustrating an example of an environment ratio output by information processing device 1. As shown in Fig. 5, the second exemplary embodiment is different from the first exemplary embodiment in that the environmental contribution information includes project environmental contribution information based on a carbon dioxide emission reduction amount in an environmental contribution project and individual environmental contribution information based on the carbon dioxide emission reduction amount in each home appliance. Further, the present exemplary embodiment is different from the first exemplary embodiment in that controller 30 calculates a contribution ratio in each home appliance which is a ratio of the individual environmental contribution information to the project environmental contribution information. Since the configuration of information processing device 1 is similar to that of the first exemplary embodiment, the description thereof will be omitted.

A detailed method for calculating the environmental contribution information in the second exemplary embodiment will be described with reference to Fig. 5.

First, in step S11, operation information is acquired by storage 20. Storage 20 acquires, via communication unit 10, operation information of each of air conditioners 41a to 41c used by the participants of the environmental contribution project and stores the operation information.

Next, in step S12, the environmental contribution information is calculated by controller 30. In the present exemplary embodiment, controller 30 calculates project environmental contribution information in step S121, and calculates individual environmental contribution information in step S122.

The project environmental contribution information is a value indicating a carbon dioxide emission reduction amount in the whole or a part of the environmental contribution project. For example, it is the sum of carbon dioxide emission reduction amounts of all air conditioners used by participants in the environmental contribution project. Alternatively, it may be the sum of the carbon dioxide emission reduction amounts for each region where the participant in the environmental contribution project lives. Controller 30 can calculate project environmental contribution information ERp by calculating the sum of environmental contribution information ER of air conditioners 41a to 41c calculated by the method described in the first exemplary embodiment.

The individual environmental contribution information is environmental contribution information ERi of each home appliance used by the participant in the environmental contribution project. The environmental contribution information calculated for each home appliance (air conditioners 41a to 41c) is individual environmental contribution information. The individual environmental contribution information is information indicating a carbon dioxide emission reduction amount in each home appliance.

Next, in step S13, controller 30 calculates a contribution ratio. The contribution ratio indicates how much the reduction amount of carbon dioxide emission by the home appliance used by the participant in the environmental contribution project is with respect to the carbon dioxide emission reduction amount as the entire project. Alternatively, the contribution ratio may be a ratio of the carbon dioxide emission reduction amount of each home appliance with respect to the carbon dioxide emission reduction amount of the entire region where the participants in the environmental contribution project live.

Controller 30 can calculate contribution ratio Rt by an equation of Rt = ERi/ERp based on project environmental contribution information ERp and individual environmental contribution information ERi.

Next, in step S14, controller 30 notifies the participants of the information regarding the contribution ratio calculated in step S13 via communication unit 10. Controller 30 can notify the participants of the information regarding the contribution ratio by transmitting the information regarding the contribution ratio of air conditioners 41a to 41c used by the participants to each of the user terminals 42a to 42c. At this time, controller 30 may notify the participants of the environmental contribution information including the project environmental contribution information and the individual environmental contribution information calculated in step S12. Fig. 6 illustrates an example of display of information regarding the contribution ratio transmitted to the smartphone which is user terminal 42a possessed by the participant. In the example of Fig. 6, as information 52 regarding the contribution ratio, contribution ratio 52a in the region where the participant lives and contribution ratio 52b in the entire environmental contribution project are displayed in a graph. By indicating the contribution degree of the participant to the environmental contribution project in a visually easy-to-understand manner, it is possible to improve the desire for participation of the participant in the environmental contribution project.

### (Third exemplary embodiment)

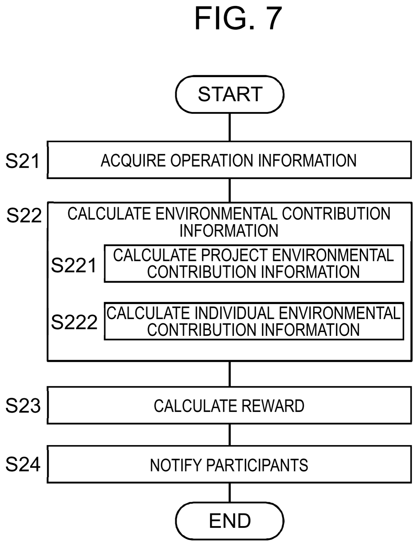

A third exemplary embodiment will be described with reference to Figs. 7 to 8. In the third exemplary embodiment, the same or equivalent components as those in the second exemplary embodiment are denoted by the same reference numerals as those in the second exemplary embodiment. In the third exemplary embodiment, the description overlapping with the second exemplary embodiment is omitted.

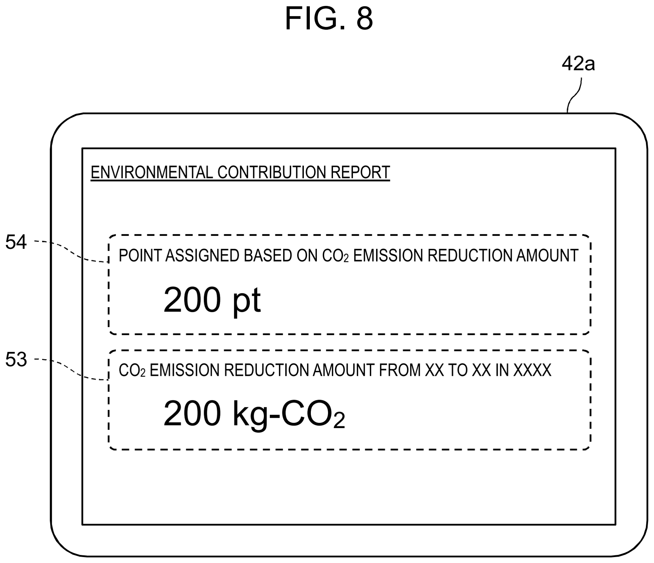

Fig. 7 is a flowchart illustrating an operation flow of information processing device 1 according to the third exemplary embodiment. Fig. 8 is a diagram illustrating an example of a reward output by information processing device 1. As illustrated in Fig. 7, the third exemplary embodiment is different from the second exemplary embodiment in that controller 30 calculates a reward based on the individual environmental contribution information and notifies a participant of reward information regarding the reward. Since the configuration of information processing device 1 is similar to that of the second exemplary embodiment, the description thereof will be omitted.

Steps S21 to S22 in Fig. 7 are processing similar to steps S11 to S12 in Fig. 5 described in the second exemplary embodiment, and thus the description thereof is omitted here.

When controller 30 calculates the project environmental contribution information and the individual environmental contribution information in steps S21 to S22, controller 30 calculates a reward based on the individual environmental contribution information in step S23. The reward includes at least one of cash, points, or content associated with a non-fungible token (NFT), and is calculated based on the individual environmental contribution information by air conditioners 41a to 41c, that is, a carbon dioxide emission reduction amount. The content associated with the NFT includes an environmental contribution certification, a certification patch, or the like that certifies a participant's contribution to the environment. The participant in the environmental contribution project can receive a reward such as cash according to the carbon dioxide emission reduction amount by air conditioners 41a to 41c used by the participant.

Next, in step S24, controller 30 notifies the participant of reward information regarding the reward calculated in step S23 via communication unit 10. Controller 30 can notify the participant of the reward information by transmitting the reward information based on the carbon dioxide emission reduction amount of air conditioners 41a to 41c used by the participant to each of user terminals 42a to 42c. Fig. 8 illustrates an example of reward information transmitted to a smartphone that is user terminal 42a possessed by the participant. In the example of Fig. 8, carbon dioxide emission reduction amount 53 by air conditioner 41a and point 54 assigned based on carbon dioxide emission reduction amount 53 are displayed. The reward can be calculated based on the individual environmental contribution information for a predetermined period, for example, every month, every three months, or every year. By calculating the reward based on the reduction amount of carbon dioxide emission by the home appliance used by the participant, it is possible to further improve the desire of the participant to contribute to the environment in the environmental contribution project.

### (Fourth exemplary embodiment)

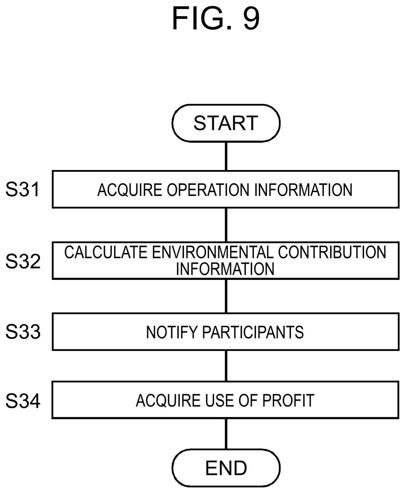

A fourth exemplary embodiment will be described with reference to Figs. 9 to 11. In the fourth exemplary embodiment, the same or equivalent components as those in the first exemplary embodiment are denoted by the same reference numerals as those in the first exemplary embodiment. In the fourth exemplary embodiment, the description overlapping with the first exemplary embodiment is omitted.

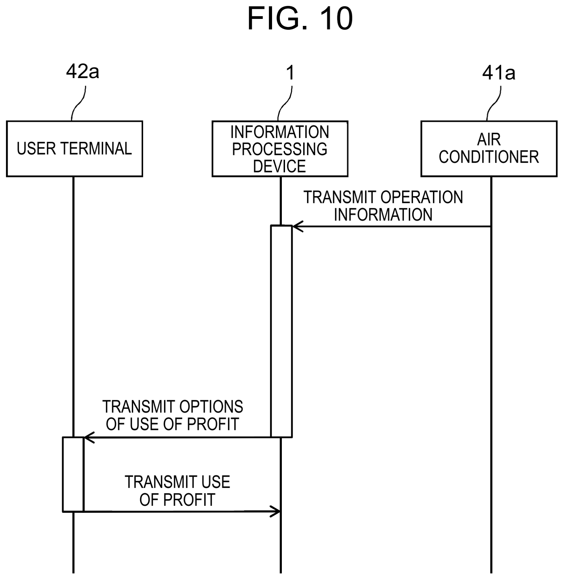

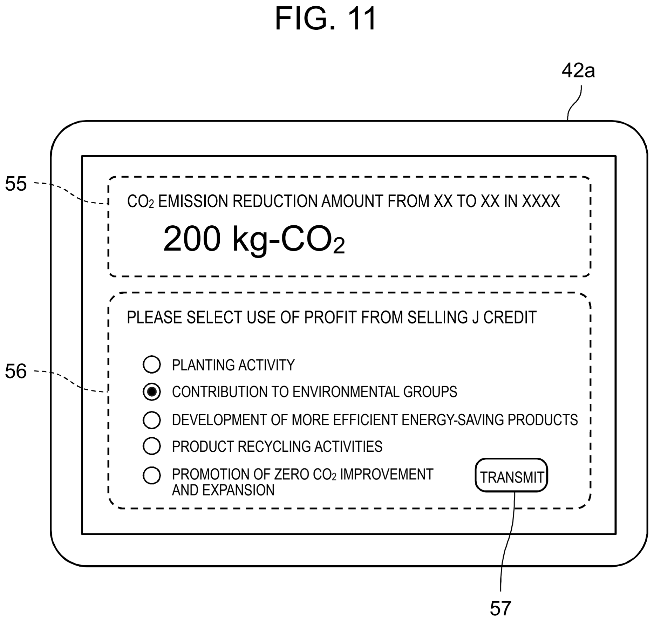

Fig. 9 is a flowchart illustrating an operation flow of information processing device 1 according to the fourth exemplary embodiment. Fig. 10 is a sequence diagram illustrating a processing sequence of information processing device 1. Fig. 11 is a diagram illustrating an example of a selection screen output by information processing device 1. As illustrated in Fig. 9, the fourth exemplary embodiment is different from the first exemplary embodiment in that storage 20 acquires, via communication unit 10, information regarding a use of profit created by environmental contribution information from a participant and stores the information. Since the configuration of information processing device 1 is similar to that of the first exemplary embodiment, the description thereof will be omitted.

Steps S31 to S32 in Fig. 9 are processing similar to steps S1 to S2 in Fig. 2 described in the first exemplary embodiment, and thus description thereof is omitted here.

In step S33, as illustrated in Fig. 10, controller 30 notifies the participants of options of the use of profit. As illustrated in the example of Fig. 11, environmental contribution information 55 indicating the carbon dioxide emission reduction amount by air conditioner 41a and option 56 for selecting the use of profit created by environmental contribution information 55 are displayed. The profit created by environmental contribution information 55 refers to the profit obtained by the environmental contribution project by selling the carbon dioxide emission amount reduced in the environmental contribution project as a credit. The use of profit indicates what kind of activity the profit is to be invested in in the environmental contribution project. For example, in the example of Fig. 11, options such as tree planting activities, contributions to environmental organizations, development of more efficient energy saving products, product recycling activities, and promotion of expansion of a zero-carbon dioxide factory are illustrated as the use of profit. Controller 30 notifies the participant of options 56, and the participant can select a use of profit from among the options 56.

Next, in step S34, as illustrated in Fig. 10, storage 20 acquires and stores the way to use selected by the participant. For example, the example of Fig. 11 illustrates that the participant has selected "contributions to environmental organizations" as the use of profit, and when the participant presses send button 57 on user terminal 42a, information on the use selected by the participant is transmitted to information processing device 1. Storage 20 acquires and stores information regarding the use of profit selected by the participant. Since the participants can select the use of profit created by the environmental contribution information, it is possible to further improve the desire for participation of the participants in the environmental contribution project.

Note that, in the above-described exemplary embodiment, an example has been described in which, after calculating the environmental contribution information, controller 30 notifies the participants of the options of the use of profit, and storage 20 acquires and stores the information regarding the use of profit from the participants, but the present invention is not limited thereto. Before calculating the environmental contribution information, controller 30 may notify the participants of the options of the use of profit, and storage 20 may acquire and store information regarding the use of profit from the participants.

### (Supplementary note)

The above description of the exemplary embodiments discloses the following technologies.

### (Technology 1)

An information processing device for notifying environmental contribution information based on a reduction amount of carbon dioxide emission by a home appliance used by a participant in an environmental contribution project, the information processing device including: a communication unit that performs communication via a network; and a controller that controls the communication unit, in which the controller acquires environmental contribution information calculated based on operation information of the home appliance, and notifies the participant of the environmental contribution information via the communication unit.

With such a configuration, it is possible to present the environmental contribution information to the participant in the environmental contribution project, and to improve the desire for participation of the participant.

### (Technology 2)

The information processing device according to Technology 1, further including a storage that stores operation information of a home appliance, in which the controller calculates the environmental contribution information based on the operation information.

With such a configuration, it is possible to present the environmental contribution information to the participant in the environmental contribution project, and to improve the desire for participation of the participant.

### (Technology 3)

The information processing device according to Technology 2, in which the controller calculates a first environmental contribution calculation value indicating energy consumption information of the home appliance based on the operation information in a predetermined period, calculates a second environmental contribution calculation value indicating energy consumption information serving as a reference for calculating the carbon dioxide emission reduction amount based on the first environmental contribution calculation value and a predetermined coefficient, and calculates the environmental contribution information based on the first environmental contribution calculation value and the second environmental contribution calculation value.

With such a configuration, the environmental contribution information can be calculated more accurately.

### (Technology 4)

The information processing device according to Technology 3, in which the controller calculates an estimated value of the future environmental contribution information based on the first environmental contribution calculation value.

With such a configuration, it is possible to calculate an estimated value of the environmental contribution information with high accuracy based on the result.

### (Technology 5)

The information processing device according to Technology 3 or 4, in which the home appliance is an air conditioner, the predetermined coefficient includes a first coefficient during cooling operation of the air conditioner and a second coefficient during heating operation of the air conditioner, and the controller calculates the second environmental contribution calculation value based on the first environmental contribution calculation value and the first coefficient during the cooling operation of the air conditioner, and calculates the second environmental contribution calculation value based on the first environmental contribution calculation value and the second coefficient during the heating operation of the air conditioner.

With such a configuration, it is possible to calculate the environmental contribution information indicating the reduction amount of carbon dioxide emission due to the use of the air conditioner.

### (Technology 6)

The information processing device according to Technology 5, in which the air conditioner includes an indoor unit and an outdoor unit, and the first environmental contribution calculation value is a value obtained by adding indoor energy consumption information based on energy consumed by the indoor unit and outdoor energy consumption information based on energy consumed by the outdoor unit.

With such a configuration, the environmental contribution information can be calculated more accurately.

### (Technology 7)

The information processing device according to any one of Technologies 2 to 6, in which the storage further stores information regarding participants participating in the environmental contribution project, the environmental contribution information includes project environmental contribution information based on a carbon dioxide emission reduction amount in the whole or a part of the environmental contribution project and individual environmental contribution information based on a carbon dioxide emission reduction amount in each home appliance, and the controller acquires a contribution ratio in each home appliance, which is a ratio of the individual environmental contribution information to the project environmental contribution information.

With such a configuration, the desire for participation of the participant can be further improved.

### (Technology 8)

The information processing device according to Technology 7, in which the controller calculates a reward including at least one of cash, points, or content associated with the NFT based on the individual environmental contribution information, and notifies the participant of reward information regarding the reward via the communication unit.

With such a configuration, the desire for participation of the participant can be further improved.

### (Technology 9)

The information processing device according to Technology 7 or 8, in which the controller transmits information regarding the contribution ratio to a terminal possessed by the participant or notifies the terminal possessed by the participant of information for accessing the information regarding the contribution ratio via the communication unit.

With such a configuration, the desire for participation of the participant can be further improved.

### (Technology 10)

The information processing device according to any one of Technologies 7 to 9, in which the storage further stores user information regarding a user who uses the home appliance, the participant who participates in the environmental contribution project is one of the users who uses the home appliance, and the controller notifies the participant among the users of the environmental contribution information.

With such a configuration, it is possible to correctly notify the participant of the environmental contribution program of the environmental contribution information.

### (Technology 11)

The information processing device according to any one of Technologies 2 to 10, in which the storage acquires, via the communication unit, information regarding a use of profit created by the environmental contribution information from the participant and stores the information.

With such a configuration, the desire for participation of the participant can be further improved.

### (Technology 12)

A method for calculating and notifying environmental contribution information based on a reduction amount of carbon dioxide emission by a home appliance used by a participant of an environmental contribution project, the method including the steps of: acquiring operation information of the home appliance; calculating environmental contribution information based on the operation information; and notifying the participant of the calculated environmental contribution information.

With such a configuration, it is possible to present the environmental contribution information to the participant in the environmental contribution project, and to improve the desire for participation of the participant.

### (Technology 13)

A program for causing an information processing device to execute the method of Technology 12.

With such a configuration, it is possible to present the environmental contribution information to the participant in the environmental contribution project, and to improve the desire for participation of the participant.

### (Technology 14)

A non-transitory computer-readable storage medium storing a program for causing a computer to perform the method of Technology 12.

With such a configuration, it is possible to present the environmental contribution information to the participant in the environmental contribution project, and to improve the desire for participation of the participant.

### INDUSTRIAL APPLICABILITY

The present disclosure can be applied to an information processing device that calculates environmental contribution information such as a carbon dioxide emission reduction amount in an environmental contribution project.

## Claims

1. An information processing device for notifying environmental contribution information based on a reduction amount of carbon dioxide emission by a home appliance used by a participant of an environmental contribution project, the information processing device comprising:
a communication unit that performs communication via a network; and
a controller that controls the communication unit, wherein
the controller acquires the environmental contribution information calculated based on the operation information of the home appliance, and notifies the participant of the environmental contribution information via the communication unit.

2. The information processing device according to Claim 1, further comprising
a storage that stores operation information of the home appliance, wherein
the controller calculates the environmental contribution information based on the operation information.

3. The information processing device according to Claim 2, wherein
the controller
calculates a first environmental contribution calculation value indicating energy consumption information of the home appliance based on the operation information in a predetermined period,
calculates a second environmental contribution calculation value indicating energy consumption information serving as a reference for calculating the carbon dioxide emission reduction amount based on the first environmental contribution calculation value and a predetermined coefficient, and
calculates the environmental contribution information based on the first environmental contribution calculation value and the second environmental contribution calculation value.

4. The information processing device according to Claim 3, wherein the controller calculates an estimated value of the future environmental contribution information based on the first environmental contribution calculation value.

5. The information processing device according to Claim 3 or 4, wherein
the home appliance is an air conditioner,
the predetermined coefficient includes a first coefficient during cooling operation of the air conditioner and a second coefficient during heating operation of the air conditioner, and
the controller
calculates the second environmental contribution calculation value based on the first environmental contribution calculation value and the first coefficient during the cooling operation of the air conditioner, and
calculates the second environmental contribution calculation value based on the first environmental contribution calculation value and the second coefficient during the heating operation of the air conditioner.

6. The information processing device according to Claim 5, wherein
the air conditioner includes an indoor unit and an outdoor unit, and
the first environmental contribution calculation value is a value obtained by adding indoor energy consumption information based on consumed energy of the indoor unit and outdoor energy consumption information based on consumed energy of the outdoor unit.

7. The information processing device according to Claim 2, wherein
the storage further stores participant information on a participant participating in the environmental contribution project,
the environmental contribution information includes project environmental contribution information based on a carbon dioxide emission reduction amount in the whole or a part of the environmental contribution project, and individual environmental contribution information based on a carbon dioxide emission reduction amount in each of the home appliances, and
the controller acquires a contribution ratio in each of the home appliances, the contribution ratio being a ratio of the individual environmental contribution information to the project environmental contribution information.

8. The information processing device according to Claim 7, wherein the controller calculates a reward including at least one of cash, points, or content associated with NFT based on the individual environmental contribution information, and notifies the participant of reward information regarding the reward via the communication unit.

9. The information processing device according to Claim 7, wherein the controller transmits information regarding the contribution ratio to a terminal possessed by the participant or notifies the terminal possessed by the participant of access information for accessing the information regarding the contribution ratio via the communication unit.

10. The information processing device according to Claim 7, wherein
the storage further stores user information regarding a user who uses the home appliance,
a participant participating in the environmental contribution project is one of users who use the home appliance, and
the controller notifies the participant among the users of environmental contribution information.

11. The information processing device according to Claim 2, wherein the storage acquires, via the communication unit, information regarding a use of profit created based on the environmental contribution information from a participant and stores the information.

12. A method for calculating and notifying environmental contribution information based on a reduction amount of carbon dioxide emission by a home appliance used by a participant of an environmental contribution project, the method comprising the steps of:
acquiring operation information of the home appliance;
calculating the environmental contribution information based on the operation information; and
notifying the participant of the calculated environmental contribution information.

13. A program for causing an information processing device to execute the method according to Claim 12.

14. A non-transitory computer-readable storage medium storing a program for causing a computer to execute the method according to Claim 12.
